# EUROPEAN PATENT APPLICATION

(11) **EP 4 773 727 A1**
(43) Date of publication of application: **08.07.2026**
(21) Application number: 26150303.1
(22) Date of filing: 06.01.2026
(51) Int. Cl.: H04W 84/12, H04W 74/0816

(54) **PREEMPTION COORDINATION FRAME TO COORDINATE TRANSMISSION OF ONE OR MORE STREAMS**

(30) Priority: 07.01.2025 US 202519012517
(71) Applicant: Nokia Technologies Oy, 02610 Espoo (FI)
(72) Inventor: LIUBOGOSHCHEV, Mikhail, 81375 München (DE); TALARICO, Salvatore, Sunnyvale, CA, 94085-3533 (US); VARSHNEY, Prabodh, Irving, TX,, 75039 (US); COSTA, Mario, 8600-760 Lagos (PT); LEE, Juhyung, Santa Clara, CA,, 95054 (US); DOPPLER, Klaus Franz, Albany, CA,, 94706 (US); MUTGAN, Orhan Okan, 81539 München (DE); JOHNSSON, Kerstin, Palo Alto, CA,, 94306 (US); KASSLIN, Mika, 02770 Espoo (FI)
(74) Representative: Richardt Patentanwälte PartG mbB

(57) **Abstract**

The present subject matter relates to a method comprising: communicating a frame to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

## Description

### Technical Field

Various example embodiments relate to telecommunication systems, and more particularly to an apparatus to communicate a frame to coordinate transmission of one or more streams.

### Background

Low latency data transmission in current Wi-Fi deployments may face challenges due to the use of transmission opportunity (TXOP). TXOP may grant a station (STA) exclusive access to a channel for a specific duration, preventing other STAs in the coverage area from contending for the channel. Non-TXOP-holder STAs, including both APs and non-AP devices, may have to wait for the TXOP to end before attempting to access the channel. This contention delay may significantly impact low latency traffic, potentially exceeding the latency requirements defined by the traffic's quality of service (QoS) parameters.

### Summary

Example embodiments provide an apparatus, referred to as first apparatus, for a wireless communication system, the first apparatus being capable of being a part of a set of apparatuses that are configured for accessing a communication channel of the wireless communication system; the first apparatus comprising at least one processor; and at least one memory storing instructions that, when executed by the at least one processor, cause the first apparatus at least to: communicate a frame to coordinate transmission of one or more streams by associated one or more second apparatuses of the set of apparatuses on the communication channel, the frame providing each second apparatus with control information to enable or disable transmission of a stream of the one or more streams by the second apparatus within at least one time window allocated for transmission on the communication channel by one or more third apparatuses of the set of apparatuses.

Example embodiments provide a method comprising: communicating a frame to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

Example embodiments provide a non-transitory computer readable medium comprising program instructions that, when executed by an apparatus, cause the apparatus to perform at least the method.

Example embodiments provide a computer program comprising instructions for causing a first apparatus for performing at least the following: communicate a frame to coordinate transmission of one or more streams by associated one or more second apparatuses of the set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

Example embodiments provide an apparatus, referred to as second apparatus, for a wireless communication system, the second apparatus being capable of being a part of a set of apparatuses that are configured for accessing a communication channel of the wireless communication system; the second apparatus comprising at least one processor; and at least one memory storing instructions that, when executed by the at least one processor, cause the second apparatus at least to: receive a frame comprising control information to enable or disable transmission of a stream by the second apparatus within at least one time window allocated for transmission on the communication channel by one or more third apparatuses of the set of apparatuses.

Example embodiments provide a method (reception method) comprising: receiving by a second apparatus a frame comprising control information to enable or disable transmission of a stream by the second apparatus within at least one time window allocated for transmission on the communication channel by one or more third apparatuses of the set of apparatuses.

Example embodiments provide a non-transitory computer readable medium comprising program instructions that, when executed by an apparatus, cause the apparatus to perform at least the reception method.

"First," "Second,", "Third" etc. as used herein, these terms are used as labels for nouns that they precede, and do not necessarily imply any type of ordering (e.g., spatial, temporal, logical) unless explicitly defined as such.

### Brief Description of the Drawings

The accompanying figures are included to provide a further understanding of examples, and are incorporated in and constitute part of this specification. In the figures:
FIG. 1 illustrates an example wireless communication system in which the present subject matter may be implemented in accordance with an example;
FIG. 2 is a process block of a method to coordinate transmission of one or more streams in accordance with an example of the present subject matter;
FIG. 3 is a signaling diagram illustrating a method for managing pre-emption within a basic service set (BSS) in accordance with an example of the present subject matter;
FIG. 4A illustrates the structure of a frame in accordance with an example of the present subject matter;
FIG. 4B illustrates the structure of the body of the frame in accordance with an example of the present subject matter;
FIG. 4C illustrates the structure of the stream field in the body of the frame in accordance with an example of the present subject matter;
FIG. 4D is a table defining control field values for pre-emption settings in accordance with an example of the present subject matter;
FIG. 5 is a block diagram showing an example of an apparatus according to an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable accurate and efficient pre-emption management for transmissions on a shared communication channel in a wireless communication system by orchestrating the timing and permissions for pre-emption events. It may enable pre-emption to be enabled or disabled for specific streams from particular apparatuses, offering precise control over which transmissions are subject to pre-emption. Specifically, it may manage pre-emption eligibility for streams on a per-time-window basis, ensuring targeted and flexible coordination. Moreover, the present subject matter may allow for the simultaneous coordination of pre-emption permissions with multiple or all apparatuses, significantly reducing signaling overhead. By communicating a frame containing specific control information for each second apparatus, transmissions may be managed carefully to avoid conflicts and minimize interference. The ability to enable or disable streams within time windows allocated to third apparatuses may provide flexibility in resource utilization, prioritization of critical data, and seamless support for low-latency or high-priority streams.

A first apparatus may be provided. The first apparatus may be configured to access a communication channel of a wireless communication system. This access may involve transmitting data by the first apparatus using the communication channel. The communication channel may refer to a specific frequency range, and transmitting data using the communication channel may involve encoding the data into signals having frequencies within that range. The communication channel may be used by the first apparatus and other apparatuses which may compete for access to the communication channel. As a result, these apparatuses, including the first apparatus, form a set of apparatuses contending for access to the communication channel. This contention may cause interference, as all apparatuses in the set may attempt to access the channel simultaneously.

Each apparatus of the set of apparatuses may be any device capable of connecting to and communicating within the wireless communication system. The apparatus may include a client device, such as smartphone, laptop, and Internet of Things (IoT) device, or an access point (AP). In one example, each apparatus of the set of apparatuses may comprise a station (STA), and thus may be referred to as station. The apparatus which is not an access point may comprise a station and may thus be referred to as non-AP station. Hence, the station may refer to an access point or a non-AP station. The apparatus may, for example, be configured to operate in accordance with enhanced distributed channel access (EDCA) mechanism and integrating the present subject matter.

The wireless communication system may comprise one or more wireless networks. A wireless network of the wireless communication system may refer to a network comprising one or more network nodes such as access points or the like which are capable of wireless radio communication with apparatuses connected to the wireless network. The set of apparatuses may belong to, or be connected to, a single wireless network within the wireless communication system, or they may belong to two or more neighboring wireless networks within the system, where the neighborhood may enable shared access to the same communication channel.

The first apparatus may be configured to communicate a frame to coordinate transmission of one or more streams by associated one or more second apparatuses of the set of apparatuses on the communication channel. The frame may be a structured data unit. The frame may encapsulate data and include additional information, such as addressing, error checking, or control instructions, to enable reliable transmission. The stream may represent a specific type of traffic (e.g., video, audio, or control signals). The stream may refer to a flow of data representing a logical sequence of related data packets or signals associated with a specific application, service, or communication session. The frame is communicated to enable coordination of the transmission of the one or more streams by the one or more second apparatuses respectively. Each stream of the one or more streams is associated with a respective second apparatus of the one or more second apparatuses and may be transmitted by that second apparatus. The transmission of the one or more streams may be performed on the communication channel by the one or more second apparatuses respectively. For each second apparatus of the one or more second apparatuses, the associated at least one time window is assigned to the one or more third apparatuses respectively. Each time window of the at least one time window may be set, defined, obtained, or allocated by the respective third apparatus. The allocated time window may be intended to provide the third apparatus with exclusive access to the communication channel for data transmission. However, this communication may not occupy the entire time window. For example, the transmission by the third apparatus within the time window may include interruptions in communication or periods of inactivity where no communication occurs. The present subject matter may leverage these interruptions or idle periods to allow the one or more second apparatuses, which are not allocated the time window, to perform transmissions during these periods. This mechanism may be referred to as pre-emption of the communication performed by the third apparatus. Each second apparatus may be configured to transmit at least part of the respective stream through pre-emption during the at least one time window associated with the second apparatus. In one example, each second apparatus may be configured to pre-empt the transmission within its respective time window by the corresponding third apparatus only after a certain percentage of the time window has elapsed since the start of the time window. If a second apparatus is pre-empting a specific time window allocated to a specific third apparatus and associated with other second apparatuses for pre-emption, the other second apparatuses and the third apparatus may attempt to pre-empt the transmission by the second apparatus during its associated interruption period. For example, the third apparatus may have the highest priority to pre-empt so it may regain access to the communication channel to resume its transmission. In one example, a pre-emptee (such as the third apparatus) may be configured to deliberately interrupt its transmission during time window being a TXOP to provide pre-emption opportunities and once a pre-emptor (such as the second apparatus) finishes its transmission, the TXOP may be considered interrupted and STAs may start channel contention once again. Hence, the coordination may involve managing the pre-emption of transmissions on the communication channel, including specifying pre-emption permissions for streams and identifying which transmissions are subject to pre-emption. The transmission by the third apparatus that is subject to pre-emption may be an uplink transmission, a downlink transmission or a peer-to-peer transmission. The uplink transmission may refer to the transmission by the third apparatus toward an access point of the set of apparatuses. The downlink transmission may refer to the transmission by the third apparatus, being an access point, toward an apparatus of the set of apparatuses. The peer-to-peer transmission may refer to direct communication between the third apparatus and another apparatus within the set of apparatuses, bypassing the access point.

The frame provides each second apparatus of the one or more second apparatuses with control information to enable or disable transmission of the stream by the second apparatus within at least one time window allocated for transmission on the communication channel by one or more third apparatuses of the set of apparatuses. The time window may represent a continuous duration during which the respective third apparatus has access to the communication channel for its transmissions. Indeed, the frame provides each second apparatus of the one or more second apparatuses with control information. This control information may be used to enable or disable the transmission of the stream by the associated second apparatus through pre-emption. The transmission of the stream by the second apparatus may occur within at least one time window allocated for transmission on the communication channel by one or more third apparatuses of the set of apparatuses. Hence, each second apparatus of the one or more second apparatuses may be associated with respective at least one time window for transmission of the respective stream within the at least one time window. For example, two or more second apparatuses are each associated with a respective set of one or more time windows, where these sets may be entirely distinct, partially overlapping, or fully identical. For example, one second apparatus may have multiple time windows to pre-empt, such as TW1 and TW2, another second apparatus may have a different time window to pre-empt, such as TW3, and another second apparatus may have yet another time window to pre-empt, such as TW4. The time windows TW1, TW3, and TW4 may be identical, partially overlapping, or entirely distinct from each other, accommodating various transmission scheduling scenarios. Similarly, the time windows TW2, TW3, and TW4 may be identical, partially overlapping, or entirely distinct from each other.

A pre-emptor may refer to an apparatus from the set of apparatuses that performs transmission of the respective stream on the communication channel during at least one time window allocated for one or more other apparatuses of the set of apparatuses on the communication channel, overriding or utilizing the unused portion of the time window allocated to the other apparatus(es). An apparatus may become a pre-emptor through a decision made by the first apparatus, by a predefined scheduling mechanism within the wireless communication system, or by a negotiation process involving the apparatuses in the set of apparatuses. A pre-emptee may refer to an apparatus whose allocated time window is subject to pre-emption, meaning its transmission may be interrupted to accommodate the pre-emptor's transmission. An apparatus may become a pre-emptee through a decision made by itself, by the first apparatus, or by a coordination mechanism within the system.

The first apparatus may have access to information indicating which apparatus is a pre-emptor and/or a pre-emptee within the set of apparatuses. Access to this information may be obtained through the negotiation process, or by receiving predefined configurations from the wireless communication system. The first apparatus may be configured to determine the one or more streams as being streams of all the pre-emptors within the set of apparatuses or streams of a selected subset of these pre-emptors. The selection of the subset may be performed by the first apparatus based on predefined criteria, real-time network conditions, or priorities assigned to specific streams or pre-emptors. Alternatively, the first apparatus may not require access to information indicating which apparatus is a pre-emptor and/or a pre-emptee. Instead, the first apparatus may determine the one or more streams as including any streams to be transmitted, encompassing streams from any apparatus within the set of apparatuses.

In one example, the first apparatus may be a pre-emptor and/or pre-emptee. In case the first apparatus is a pre-emptee, the one or more streams may include any streams from other apparatuses within the set of apparatuses or streams from apparatuses designated as pre-emptors within the set of apparatuses.

Upon determining the one or more streams, the first apparatus may schedule pre-emption for the one or more second apparatuses, enabling the transmission of the respective streams through pre-emption. For each second apparatus, the first apparatus may decide the type of transmission that can be interrupted during the associated time window for transmitting the stream by the second apparatus. The type of transmission, linked to each allocated time window, may include at least one of the following: an uplink transmission, a downlink transmission, or a peer-to-peer transmission. Additionally, the first apparatus may determine, for each second apparatus, the frequency or number of time windows for the selected type of transmission that can be interrupted by the second apparatus. As a result, each second apparatus may be assigned one or more time windows for transmission through pre-emption of the respective stream.

According to one example, the at least one time window associated with each second apparatus of the one or more second apparatuses is: one time window for transmission by the third apparatus, in case the one or more third apparatuses is one apparatus, or multiple time windows for transmissions by the respective third apparatuses. The transmission by the third apparatus may be an uplink transmission, a downlink transmission or a peer-to-peer transmission.

For example, the at least one time window associated with each second apparatus of the one or more second apparatuses may vary depending on the configuration and the number of third apparatuses involved. **If** the one or more third apparatuses consist of a single third apparatus, the at least one time window may correspond to a single time window that is allocated for transmission by that third apparatus. This time window may represent a continuous duration during which the third apparatus has access to the communication channel for its transmissions. Alternatively, if the one or more third apparatuses include multiple third apparatuses, the at least one time window associated with each second apparatus may comprise multiple distinct time windows. These time windows are allocated for transmissions by the respective third apparatuses, meaning each third apparatus has its own assigned time window for communication. The time windows associated with multiple third apparatuses may be sequential or entirely independent.

This example may offer flexibility in resource allocation by allowing the first apparatus to adapt to different configurations, whether involving a single third apparatus with a unified time window or multiple third apparatuses with distinct time windows.

According to one example, the at least one time window associated with each second apparatus of the one or more second apparatuses is at least one of the following: a time window that initiates prior to and continues during the communication of the frame, a time window that initiates immediately after the communication of the frame, or multiple time windows that exist in a period of time. This period of time may, for example, indicate to the second apparatus a specific duration from the reception of the frame.

For example, the at least one time window associated with each second apparatus of the one or more second apparatuses may encompass various scenarios, depending on the timing of its initiation and duration relative to the communication of the frame.

One possibility may be a time window that begins before the frame is communicated and continues throughout its transmission, ensuring the second apparatus has a continuous opportunity to transmit during this period. Alternatively, the time window may begin immediately after the communication of the frame, allowing the second apparatus to start or complete its transmission as soon as the frame has been sent. Additionally, the at least one time window may consist of multiple distinct time windows that exist within a broader period, providing flexibility for the second apparatus to transmit at various intervals during that time. This example may provide flexibility in timing and resource allocation.

The present subject matter may provide advantageous techniques for enabling the first apparatus to determine or identify the one or more streams. According to one example, the first apparatus may be configured to perform, e.g. before the communication of the frame, a negotiation of pre-emption permissions with the apparatuses comprising: receiving from the apparatuses one or more requests indicating streams, sending a response to one or more of the apparatuses indicating an acceptation of the respective one or more requests, wherein the one or more streams are indicated by the accepted one or more requests. This example may provide an example implementation for the negotiation process.

The one or more requests may be sent by respective one or more apparatuses of the set of apparatuses. The one or more apparatuses that send the requests may be the set of apparatuses excluding the first apparatus or may include only a subset of apparatuses that meet specific criteria, such as being associated with streams requiring low-latency delivery or having pre-determined priority levels.

According to some example embodiments, before the communication of the frame, the first apparatus may engage in the negotiation process to establish pre-emption permissions with other apparatuses. This process may involve the first apparatus receiving one or more requests from the one or more apparatuses respectively, where each request specifies one or more streams that the respective apparatus intends to transmit. Based on these requests, the first apparatus evaluates and determines which streams can be accommodated, then sends a response back to one or more of the requesting apparatuses. This response indicates the acceptance of their respective requests, effectively granting permission for the transmission of the streams specified in the accepted requests.

This example may enable the first apparatus to *know* in advance which streams are intended for transmission by the other apparatuses, allowing it to coordinate and optimize communication channel usage effectively. This may provide a proactive approach that may minimize conflicts by establishing clear permissions before the frame communication begins.

Alternatively, the first apparatus may determine the streams without explicit negotiation. For example, predefined configurations may specify expected streams based on static or semi-static schedules shared among apparatuses. Broadcast announcements from other apparatuses could inform the first apparatus of streams without direct interaction. Additionally, stream registration during an earlier setup phase could establish known streams in advance.

Upon determining the one or more streams, the first apparatus may communicate the frame. The communication of the frame may, for example, be performed based on the method used to determine the one or more streams. According to one example, the first apparatus may be configured to communicate the frame after sending the response for each request of the one or more requests, wherein the frame indicates the respective stream.

For example, the first apparatus may be configured to communicate the frame after sending the response for each request of the one or more requests, wherein the frame may be communicated after responding to a single request or after responding to multiple requests, and in each case, the frame indicates the respective stream associated with the request or requests. In the latter case, the frame may comprise individual frames, each corresponding to a specific request or stream, enabling precise communication and coordination for the respective streams.

As described, the communication and the definition of the frame may involve the one or more streams (referred to a set of streams), the one or more second apparatuses (referred to as set of second apparatuses) associated with the one or more streams respectively, and for each second apparatus one or more time windows (referred to as set of time windows) associated with one or more third apparatuses respectively. In other words, the communication and the frame definition may encompass the set of streams, the set of second apparatuses, and multiple sets of time windows, with each set of time windows corresponding to the respective second apparatus. In response to a change in these elements involved in the frame, the first apparatus may be configured to update the frame. The change may include a modification in at least one of: the streams, apparatuses, or associated time windows. The modification of streams may involve the addition, removal, or reassignment of a stream to a different second apparatus. The modification of apparatuses may include changes in the roles of the apparatuses (e.g., switching between pre-emptor and pre-emptee) or updates to the set of second or third apparatuses. The modification of time windows may involve adjustments to their duration, allocation, or association with specific streams or apparatuses. This may result in an updated set of streams, an updated set of second apparatuses and updated sets of time windows. Depending on the change, the updated set of streams may be completely or partially different from, or the same as, the set of streams prior to the modification. Similarly, the updated set of second apparatuses may include new apparatuses, exclude some apparatuses, or remain unchanged. The updated sets of time windows may reflect new allocations, adjusted durations, or changes in association with specific streams or apparatuses, or they may remain the same depending on the nature of the modification. The updated frame may thus be communicated to coordinate transmission of the updated set of streams by associated updated set of second apparatuses on the communication channel, the updated frame providing each second apparatus in the updated set with control information to enable or disable transmission of a stream of the updated set of streams by the second apparatus within the updated set of time windows allocated for transmission on the communication channel by one or more third apparatuses of the set of apparatuses.

According to one example, the first apparatus may be configured to: update the frame in response to any one of the following: a new stream is registered for transmission by a second apparatus of the set of apparatuses, the first apparatus, among the set of apparatuses, being allocated a new time window for transmission of data by the first apparatus during the time window, or receiving a request from a second apparatus of the set of apparatuses; and communicate the updated frame to coordinate transmission of one or more update streams by associated one or more second apparatuses of the set of apparatuses on the communication channel, the updated frame providing each second apparatus with control information which may be used to enable or disable the update stream's transmission by the second apparatus within at least one time window allocated for transmission on the communication channel by one or more third apparatuses of the set of apparatuses. The update stream is a stream and used for naming purpose.

Indeed, the first apparatus may be configured to handle dynamic updates to the frame in response to specific changes. These changes may include at least one of: the registration of a new stream for transmission by a second apparatus from the broader set of apparatuses, the allocation of a new time window for the first apparatus itself to transmit data during that time window, or receiving a request from a second apparatus within the set. In response to any of these triggers, the first apparatus may update the frame to reflect the changes and ensure proper coordination. This example may allow for real-time adaptability and precise coordination of communication, even in dynamically changing scenarios.

The present subject matter may provide flexible and efficient techniques for communicating the frame to coordinate transmissions among apparatuses.

According to one example, the first apparatus may be configured to communicate the frame by broadcasting the frame.

According to one example, the one or more second apparatuses are referred to as pre-emptors, and the one or more third apparatuses are referred to as pre-emptees. The first apparatus may be configured to: create, from the set of apparatuses, a pre-emption management multicast group of apparatuses including potential pre-emptors and potential pre-emptees, communicate the frame by performing a multicast of the frame to the pre-emption management multicast group of apparatuses.

The first apparatus may act as a coordinator and is configured to create a pre-emption management multicast group from the set of apparatuses. This group may include both potential pre-emptors and pre-emptees, ensuring that all devices involved in potential pre-emption scenarios are part of a unified group for coordination. This approach may minimize overhead by avoiding individual communication with each device. The potential pre-emptors may, for example, indicate their "willingness to pre-empt" for their specific streams during the negotiation process. The "willingness to pre-empt" may include that the potential pre-emptor is active at least during parts of a time window obtained by a third apparatus.

According to one example, the first apparatus may be configured to communicate the frame by sending a separate frame to each apparatus of the one or more second apparatuses and one or more additional apparatuses of the set of apparatuses.

This approach may involve the first apparatus communicating the frame by sending the frame to each apparatus, specifically targeting the one or more second apparatuses (pre-emptors) and additional apparatuses (such as pre-emptees or other entities) in the set of apparatuses. Unicasting, or sending a uniquely addressed frame to each apparatus, may allow for precise and individualized communication.

According to one example, the first apparatus may be configured to send the separate frames simultaneously. This example may save communication time of the frame.

For example, the unicasting of multiple frames may be performed simultaneously using Orthogonal Frequency Division Multiple Access (OFDMA), a technique that divides the available frequency spectrum into smaller, independent resource units to enable concurrent transmissions. In this scenario, the first apparatus may send individual frames to multiple apparatuses at the same time by assigning each target apparatus a specific resource unit. This may ensure that each frame is unicast to its intended recipient without contention for the channel, leveraging the efficiency of OFDMA to handle multiple transmissions in parallel.

The present subject matter may provide advantageous techniques for structuring and communicating the frame to enhance coordination and efficiency. By leveraging flexible frame types and adaptable structures, the system can address diverse requirements, such as transmitting control information, managing pre-emption, and integrating stream-specific details. These frames may be purpose-built or extend existing types to include additional functionality, ensuring seamless compatibility with the wireless communication system's protocol.

According to one example, the frame is structured in accordance with a frame type of the wireless communication system, the frame type being a data frame type, control frame type, management frame type or action frame type.

For example, the frame may be structured according to a specific frame type defined by the wireless communication system. This frame type can be one of the following: a data frame type, used primarily for transmitting user data or payloads; a control frame type, which facilitates the coordination and management of transmissions (e.g., acknowledgments or Request to Send (RTS) frame or a Clear to Send (CTS) signaling); a management frame type, designed for establishing, maintaining, or terminating connections (e.g., association or authentication frames); or an action frame type, used for executing specific actions or signaling information outside the regular data or management operations (e.g., channel switch announcements or measurement requests). The structured design of the frame may ensure that it conforms to the system's protocol standards, allowing seamless communication and interpretation within the wireless network.

According to one example, the frame is a dedicated pre-emption coordination frame or an existing scheduled data frame or control frame of the wireless communication system that is extended to contain the pre-emption coordination frame body.

The pre-emption coordination frame may comprise a body, referred to as the pre-emption coordination frame body and one or more additional fields. The pre-emption coordination frame body may, for example, comprise the pre-emption control information. The pre-emption coordination frame body may, for example, further comprise information descriptive of the one or more streams. An additional field may serve various purposes, such as addressing, control, error detection, or other functions for managing and coordinating transmissions in the communication system. For example, the frame may be either a dedicated pre-emption coordination frame, specifically designed for managing pre-emption operations, or an existing scheduled data frame or control frame of the wireless communication system that has been extended to include the pre-emption coordination frame body. In the case of a dedicated frame, the frame's sole purpose may be to coordinate pre-emption by providing relevant information and instructions. Alternatively, when using an existing frame, the pre-emption coordination frame body may be integrated into the frame as an extension, allowing the system to leverage scheduled transmissions for dual purposes, carrying regular data or control information while also managing pre-emption. This approach may enhance flexibility and reduce communication overhead by embedding pre-emption coordination within frames already part of the system's operation.

According to one example, the frame comprises per stream of the one or more streams a stream field structure comprising an identifier of the stream, an identifier of the stream's associated second apparatus and a control field comprising the control information.

For example, the frame may include, for each stream of the one or more streams, a stream field structure that contains essential information for stream identification and management. This structure comprises: an identifier of the stream, uniquely distinguishing the stream within the system, an identifier of the stream's associated second apparatus, linking the stream to the specific second apparatus responsible for its transmission, and a control field that holds the control information necessary for coordinating the stream's transmission, such as pre-emption permissions or scheduling instructions. This detailed structure may ensure that each stream and its corresponding second apparatus are accurately identified and effectively managed.

According to one example, the identifier of the stream's associated second apparatus is a medium access control, MAC, address or association ID (AID) or another unique identifier being used in the wireless communication system.

For example, the identifier of the stream's associated second apparatus is a MAC address, which uniquely identifies the second apparatus within a network of the wireless communication system. This approach may leverage the standard, globally unique nature of MAC addresses, providing compatibility with existing wireless communication protocols and simplifying apparatus identification in complex network environments.

The present subject matter may provide advantageous techniques for optimizing communication in the wireless communication system by allowing the first apparatus to serve dual roles within the wireless communication system.

According to one example, the one or more second apparatuses is the first apparatus.

The one or more second apparatuses being the first apparatus itself, may mean that the first apparatus may also be responsible for handling and transmitting the stream in addition to its role in coordinating or managing other apparatuses within the wireless communication system. This dual functionality may allow the first apparatus to actively participate in communication while simultaneously coordinating the activities of other apparatuses.

According to one example, the one or more third apparatuses is the first apparatus.

The one or more third apparatuses being the first apparatus itself, may mean that the first apparatus is not only responsible for coordinating or managing communication but also acts as a participant whose transmissions may be subject to pre-emption. This dual role may allow the first apparatus to actively engage in data transmission while remaining integrated into the pre-emption management framework.

The wireless communication system according to the present subject matter may be a Wi-Fi system, but the disclosure is not limited to Wi-Fi alone. The wireless communication system may also be adapted for use in other wireless communication systems, such as cellular networks, and any other wireless protocols that involve managing access to a shared communication channel. The Wi-Fi system may, for example, operate in accordance with an IEEE 802.11 standard such as, for example, 802.11n, 802.11ac, 802.11ax, 802.11be, or 802.11bn.

According to one example, the time window comprises a transmission opportunity (TXOP) interval. For each second apparatus of the one or more second apparatuses, each associated time window may be a TXOP. In this context, the third apparatus associated with the time window may act as the TXOP holder. This approach may leverage the TXOP mechanism to ensure efficient and conflict-free communication. By associating each time window with a specific TXOP, one may guarantee that the designated third apparatus can transmit without interference, optimizing channel utilization. For the second apparatuses, aligning their transmissions with the TXOP intervals may allow them to opportunistically pre-empt idle periods within the TXOP. This design may balance exclusivity for the TXOP holder while allowing flexibility for other apparatuses to utilize unused portions of the channel.

According to one example, the set of apparatuses are part of a BSS of the wireless communication system, wherein the first apparatus is an access point or a non-AP STA. The BSS may be an example implementation of the wireless network. In this configuration, the first apparatus may, for example, function as either an access point or a non-AP station. As an access point, the first apparatus may manage the BSS, coordinating transmissions and ensuring efficient use of the communication channel. Alternatively, as a non-AP STA, the first apparatus may actively participate in the BSS, exchanging data with other devices under the coordination of an access point. This flexible designation may allow the system to adapt to various network topologies and operational requirements, ensuring seamless integration of the first apparatus within the BSS.

The present subject matter may enable the access point to allow pre-emption to be enabled or disabled for specific traffic streams originating from particular non-AP STAs, providing precise control over which streams are subject to pre-emption. Additionally, it may allow the access point to manage which traffic streams from which non-AP STAs are eligible for pre-emption on a per-TXOP basis, ensuring that pre-emption is implemented without interfering with normal BSS operations or degrading overall network performance. Furthermore, this approach may enable the access point to coordinate pre-emption permissions with multiple, or all, non-AP STAs simultaneously, reducing signaling overhead. This coordination may also inform potential pre-emptee non-AP STAs about which other non-AP STAs have been granted permission to pre-empt AP TXOPs, allowing these non-AP STAs to make more informed decisions about permitting pre-emption during their own TXOPs. An apparatus may be determined as being potential pre-emptor and/or potential pre-emptee by using capabilities declared by the apparatus. For example, the first apparatus may *know* which STAs are potential pre-emptors and pre-emptees from the association procedure where the STAs declare their capabilities. One of such capabilities could be "providing pre-emption opportunities ".

In one example, the set of apparatuses may comprise an access point and non-AP STAs which are part of a BSS, where the time windows may be provided as TXOPs. In cases where the first apparatus comprises an access point, it may enable managing pre-emption within the BSS. To fulfill this role, the present subject matter may provide various options to ensure that pre-emption coordination frames, which enable or disable pre-emption, may effectively be received by all potential pre-emptors and pre-emptees in the BSS. Option 1 may involve the pre-emption coordination frame being a broadcast management frame with a general structure defined by the standard (in accordance with Figure 9-128 of IEEE 802.11 Working Group, Draft Standard for Information Technology-Telecommunications and Information Exchange Between Systems-Local and Metropolitan Area Networks-Specific Requirements-Part 11: Wireless LAN Medium Access Control (MAC) and Physical Layer (PHY) Specifications, IEEE P802.11-REVme/D7.0, August 2024). The pre-emption coordination frame body may have a structure with a list length field indicating the count of streams in the list, and a stream list field comprising one stream field per stream. The stream field may comprise an identifier of the non-AP STA that contains the 12 least significant bits of the non-AP STA's association ID (AID12), a stream classification service ID (SCSID) representing the stream ID, and a control field. The access point may change or update the set of streams eligible to pre-empt TXOPs, as well as the type of TXOPs (uplink or downlink or peer to peer) they are allowed to pre-empt, by broadcasting a new pre-emption coordination frame. The access point may send a new pre-emption coordination frame in cases such as acquiring a new TXOP, receiving a request from a non-AP STA to start pre-emption, or when a non-AP STA creates a new stream requiring pre-emption. Additionally, the access point may set the stream identifier to SCSID=0 (a non-existing stream ID) in the stream field to indicate that the rule applies to all streams associated with the respective non-AP STA, ensuring flexibility and efficiency in managing pre-emption rules.

Option 2 may involve using a multicast management frame for the pre-emption coordination frame. The multicast group includes all potential pre-emptors and pre-emptees in the BSS, with all other procedures remaining the same as in Option 1. To enable this option, a pre-emption management multicast group may be created. One example implementation comprises assigning potential pre-emptors and pre-emptees to a multicast group with a MAC address specifically created for pre-emption negotiation during pre-emption setup (e.g., during non-AP STA association or via pre-emption request/response frames exchanged between the access point and non-AP STAs). The access point may select an unoccupied multicast MAC address from predefined ranges, such as 01:80:C2:00:00:07 to 01:80:C2:00:00:0F, 01:00:5E:80:00:00 to 01:00:5E:FF:FF:FF, or generate a multicast MAC address using methods such as 802.1CQ. Alternatively, the multicast group may be defined explicitly by listing identifiers of all potential pre-emptors and pre-emptees, such as their AIDs or MAC addresses. In this case, Address 2's field of the MAC Header is the broadcast MAC address: ff:ff:ff:ff:ff:ff, and the frame body includes the list of non-AP STA identifiers. For example, the frame body may contain an information element listing the AID12s of all potential pre-emptors and pre-emptees. Option 3 defines the pre-emption coordination frame as a broadcast data or control frame, with its structure aligned to the specific frame type. Apart from this, all other procedures remain the same as in Option 1. In one example implementation of Option 3, the payload of the pre-emption coordination frame may be integrated into an extension of an existing control frame defined by the standard, such as RTS, MU-RTS, CTS, or another initial control frame (ICF). This may involve redefining the structure of the chosen control frame to include fields related to pre-emption coordination. The benefit of this approach may be reduced overhead and the guarantee that all potential pre-emptors and pre-emptees receive the frame, as ICF frames are transmitted at the start of the TXOP and can be decoded by any STA, even those not explicitly addressed by the ICF. Option 4 defines the pre-emption coordination frame as a multicast data or control frame, where its structure corresponds to the respective frame type. This option follows the same procedure as Option 2. Option 5 considers the pre-emption Coordination frame as a unicast management frame, with the access point sending separate frames to each potential pre-emptor and pre-emptee in the BSS. When the number of pre-emptors and pre-emptees is small, and OFDMA is used, this method can achieve similar efficiency to Option 1. With this Option 5, a reduced stream field size of 2 bytes can be employed, as the non-AP STA is already identified by the destination address. This approach's primary advantage may be maintaining the privacy of non-AP STAs' streams and association IDs. Option 6 extends Option 5 by defining the pre-emption coordination frame as a data or control frame. Option 7 introduces an alternative to the AID12 field in the stream field by using the MAC address of the non-AP STA. This may provide a more permanent identifier. Option 8 outlines a scenario where, during a TxOP where the access point acts as the TXOP responder, it can transmit a pre-emption coordination frame in any of the formats described with options 1 through 7. This frame can enable or disable pre-emption for itself to transmit low-latency (LL) data in the downlink or select other non-AP STAs and their corresponding SCSID and AID to pre-empt the TXOP of another non-AP STA. This flexibility may ensure efficient pre-emption management tailored to real-time network requirements.

In cases where the first apparatus comprises a pre-emptee non-AP STA, it may enable managing pre-emption within the BSS as follows. Pre-emptee non-AP STA may decide on a per-TXOP basis whether its uplink (UL) TXOPs can be pre-empted; however, it may not determine which non-AP STAs or streams are allowed to pre-empt, as this decision may be made by the access point. To indicate whether UL TxOPs of the pre-emptee non-AP STA are eligible for pre-emption, the non-AP STA may send a pre-emption coordination frame with a single stream field containing AID12=0, SCSID=0, and control=2. This combination may represent "wildcard" pre-emption eligibility since AIDs and SCSIDs are non-zero for specific STAs. Alternatively, instead of setting AID12=0, the non-AP STA may use a broadcast MAC address (ff:ff:ff:ff:ff:ff). This approach can improve overall BSS energy efficiency by informing potential pre-emptors when TXOPs are not open to pre-emption, allowing those STAs to enter a sleep state. The pre-emption coordination frame's format may be consistent with that used by the access point, and any of the options 1 through 4 or 7 may be applied.

In examples, the configuration information may be used by each apparatus of the one or more second apparatuses to determine whether the each apparatus may pre-empt transmission with the associated at least one time window.

In some examples, each apparatus of the second and third apparatuses may be configured to perform the reception method.

In some examples, each given apparatus of the second and third apparatuses may be configured to read the configuration information of the frame and determine whether the given apparatus is enabled or disabled to pre-empt. In response to determining that the given apparatus is enabled, the given apparatus may perform a transmission at least part of a respective stream within the associated at least one time window.

The present subject matter may comprise the following clauses.

Clause 1. An apparatus, referred to as second apparatus, for a wireless communication system, the second apparatus being capable of being a part of a set of apparatuses that are configured for accessing a communication channel of the wireless communication system; the second apparatus comprising at least one processor; and at least one memory storing instructions that, when executed by the at least one processor, cause the second apparatus at least to: receive, from a first apparatus, a frame comprising control information to enable or disable transmission of a stream by the second apparatus within at least one time window allocated for transmission on the communication channel by one or more third apparatuses of the set of apparatuses.

Clause 2. The second apparatus of clause 1, the control information being referred to as pre-emption control information, wherein the instructions, when executed by the at least one processor, further cause the second apparatus to: send a request to the first apparatus indicating the stream; and receive a response indicating an acceptation of the request. This may enable a negotiation process where e.g., the second apparatus as a non-AP STA sends stream information to the first apparatus being AP for requesting pre-emption permission.

Clause 3. The second apparatus of clause 2, wherein the request is a request indicating that the second apparatus is a pre-emptor, or a request indicating that the second apparatus is potential pre-emptor.

Clause 4. The second apparatus of any of the preceding clauses 1 to 3, wherein the at least one time window is: one time window for transmission by the third apparatus, in case the one or more third apparatuses is one apparatus; or multiple time windows for transmissions by the respective third apparatuses.

Clause 5. The second apparatus of any of the preceding clauses 1 to 4, wherein the at least one time window is at least one of the following: a time window that initiates prior to and continues during the communication of the frame; a time window that initiates immediately after the communication of the frame; or multiple time windows that exist in a period of time.

Clause 6. The second apparatus of any of the preceding clauses 1 to 5, the frame being a broadcasted frame.

Clause 7. The second apparatus of any of the preceding clauses 1 to 5, the frame being a multicast frame.

Clause 8. The second apparatus of any of the preceding clauses 1 to 5, the frame being a unicast frame.

Clause 9. The second apparatus of any of the preceding clauses 1 to 7, the configuration information being provided to enable or disable transmission of one or more other streams by one or more other second apparatuses respectively, each transmission being within at least one time window allocated for transmission on the communication channel by one or more third apparatuses of the set of apparatuses. Clause 10. The second apparatus of any of the preceding clauses 1 to 9, the frame being structured in accordance with a frame type of the wireless communication system, the frame type being a data frame type, control frame type, management frame type or action frame type.

Clause 11. The second apparatus of any of the preceding clauses 1 to 10, wherein the frame is a dedicated pre-emption coordination frame or an existing scheduled data frame or control frame of the wireless communication system that is extended to contain the pre-emption coordination frame body.

Clause 12. The second apparatus of any of the preceding clauses 1 to 11, wherein the frame comprises per stream of the one or more streams, a stream field structure comprising an identifier of the stream, an identifier of the stream's associated second apparatus and a control field comprising the control information.

Clause 13. The second apparatus of any of the preceding clauses 1 to 12, wherein the second apparatus is non-AP station, wherein the first apparatus is an access point. Clause 14. The second apparatus of any of the preceding clauses 1 to 13, wherein the time window comprises a transmission opportunity, TXOP, interval.

Clause 15. The second apparatus of any of the preceding clauses 1 to 14, wherein the set of apparatuses is capable of being a part of a basic service set, BSS, of the wireless communication system, wherein the first apparatus is an access point or a non-AP station.

Clause 16. The second apparatus of any of the preceding clauses 1 to 15, wherein the instructions, when executed by the at least one processor, further cause the second apparatus to: read the configuration information and determine whether the second apparatus is enabled or disabled within the at least one time window; in response to determining that the second apparatus is enabled, performing a transmission of at least part of the stream within the at least one time window.

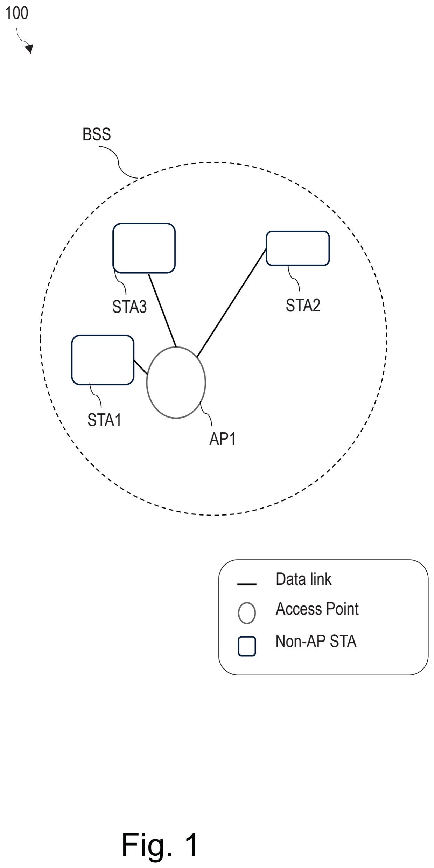

**FIG. 1** illustrates an example wireless communication system in which the present subject matter may be implemented in accordance with an example. The wireless communication system 100 is a Wi-Fi system comprising a BSS including an access point AP1 and three non-AP STAs STA1, STA2 and STA3.

As illustrated in FIG. 1, the access point AP1 and the non-AP STA STA1 may be a pair of apparatuses that communicate using a communication channel, with one apparatus functioning as the transmitter and the other apparatus as the receiver. Furthermore, the access point AP1 and the non-AP station STA2 may be a pair of apparatuses that communicate using the communication channel, with one apparatus functioning as the transmitter and the other apparatus as the receiver. Furthermore, the access point AP1 and the non-AP STA STA3 may be a pair of apparatuses that communicate using a communication channel, with one apparatus functioning as the transmitter and the other apparatus as the receiver.

Hence, the access point AP1 and the non-AP STAs STA1, STA2 and STA3 may form a set of apparatuses according to an example of the present subject matter.

The limited number of apparatuses is used for simplification and exemplification purposes, but the wireless communication system is not restricted to these specific components or quantities and may include additional or different apparatuses.

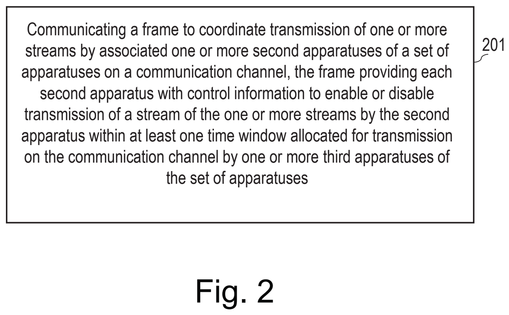

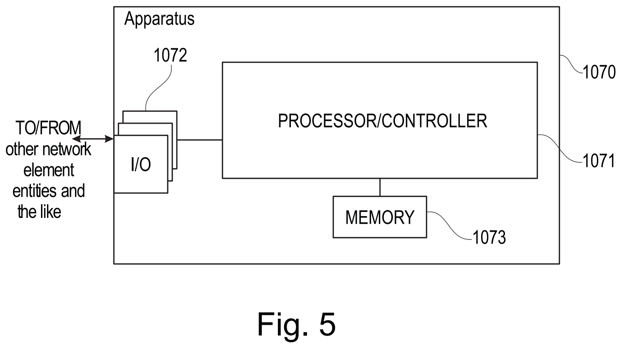

**FIG. 2** is a process block of a method to coordinate transmission of one or more streams in a communication channel of a wireless communication system in accordance with an example of the present subject matter. For the purpose of explanation, the method described in reference to FIG. 2 may be implemented in a first apparatus such as one of the set of apparatuses illustrated and described in reference to FIG. 1 or apparatus illustrated and described in reference to FIG. 5 but is not limited to this implementation.

In step 201, a frame may be communicated to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

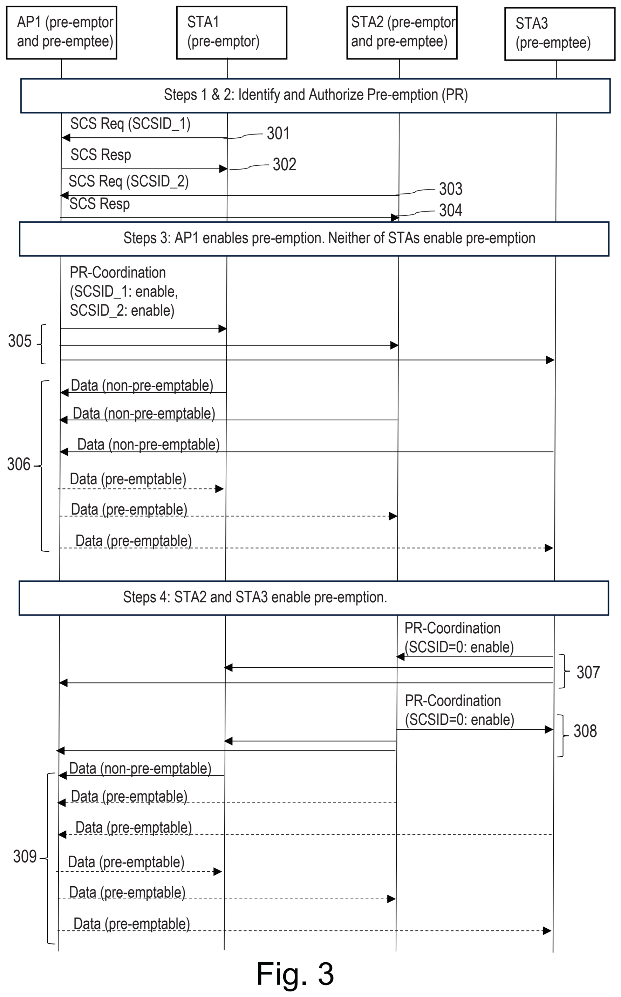

**FIG. 3** is a signaling diagram illustrating a method for managing pre-emption within a BSS. The method described in reference to FIG. 3 may be implemented in the BSS illustrated and described in reference to FIG. 1 but is not limited to this implementation.

The method begins with Steps 1 and 2, where the access point AP1 acting as both a pre-emptor and pre-emptee, identifies and authorizes pre-emption requests. For that, the access point AP1 may receive (301) a SCS Request (including an SCSID: SCSID_1) sent by non-AP STA STA1 (pre-emptor). In response, the access point AP1 may send (302) the corresponding SCS Response back to the non-AP STA STA1. Similarly, the access point AP may receive (303) an SCS Request (including an SCSID: SCSID_2) from non-AP STA2 (pre-emptor and pre-emptee) and respond by sending (304) the corresponding SCS Response to non-AP STA2. Step 1 may comprise operations 301 and 303 and step 2 may comprise operations 302 and 304. Steps 1 and 2 may be performed concurrently or sequentially.

In Step 3, the access point AP1 enables pre-emption for SCSID_1 and SCSID_2 but ensures that none of the non-AP STAs, including STA1, STA2, and STA3 (pre-emptee), enable pre-emption at this stage. For that, the access point AP1 may send (305) a pre-emption coordination frame to the non-AP STAs to enable pre-emption for SCSID_1 and SCSID_2, specifying the pre-emption permissions for each stream. Following this, as indicated by operations 306 data transmitted by the access point during a its TXOP may be pre-emptable by the non-AP STAs STA1 and STA2, while data transmitted by the non-AP STAs STA1, STA2 and STA3 is not pre-emptable.

In Step 4, non-AP STAs STA2 and STA3 enable pre-emption during their respective TXOPs. For that, non-AP STA STA2 may send (308) to the access point AP1 and the non-AP STAs STA1 and STA3 a pre-emption coordination frame with SCSID=0, enabling pre-emption for all streams in the BSS. Similarly, non-AP STA STA3 may send (307) to the access point AP1 and the non-AP STAs STA1 and STA2 a pre-emption coordination frame with SCSID=0, enabling pre-emption for all streams in the BSS. Following this, as indicated by operations 309 data transmitted by the access point AP1 and the non-AP STAs STA2 and STA3 during their respective TXOP may be pre-emptable by the pre-emptors of the BSS, while data transmitted by the non-AP STA STA1 is not pre-emptable.

The operations 301 through 304 may provide an example implementation of the negotiation process. Operation 305 may provide an example implementation of step 201 of FIG. 2. For operations 306, STA1 and STA2 may provide an example implementation of the second apparatuses respectively and the access point AP1 may provide an example implementation of the first apparatus. Operation 307 may provide an example implementation of step 201 of FIG. 2. Operation 308 may provide an example implementation of step 201 of FIG. 2. For operations 309, AP1, STA1 and STA2 may provide an example implementation of the second apparatuses and STA2 or STA3 may provide an example implementation of the first apparatus.

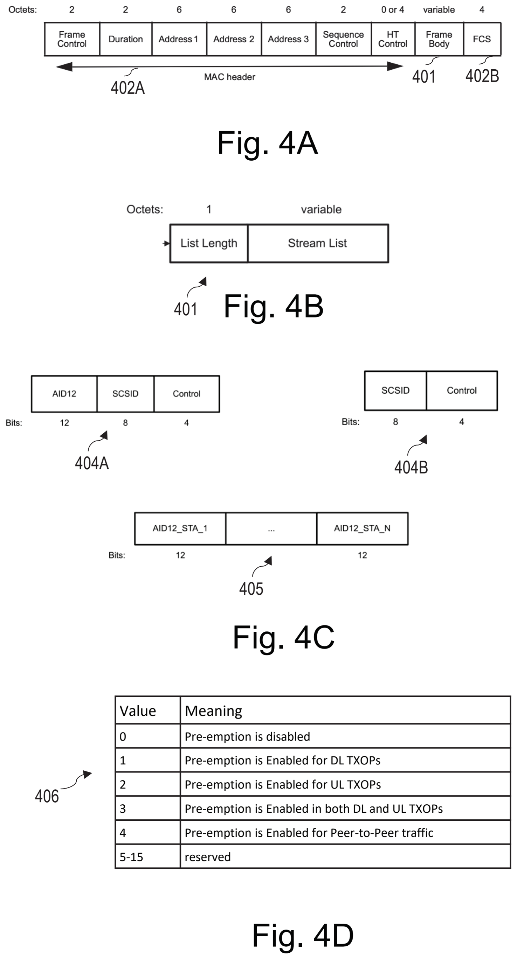

**FIG. 4A** illustrates the structure of a frame in accordance with an example of the present subject matter. The frame comprises a body 401 and additional fields e.g., for addressing, control, and error detection in the wireless communication system. The body 401, also referred to as the frame body, contains a variable payload or data being transmitted. The additional fields represent a MAC header 402A and frame check sequence (FCS) field 402B. The MAC header includes the frame control field, which is 2 octets long, to indicate the frame type and other control information, and the duration field, which is 2 octets long, to specify the required transmission time, including acknowledgments. The MAC header 402A has three address fields: address 1, which is 6 octets long, address 2, which is 6 octets long, and Address 3, which is 6 octets long, where address 1 is the broadcast MAC address, and address 2 and 3 are the BSS identifier (BSSID). The MAC header 402A further comprises a sequence control field, which is 2 octets long, to ensure reliable delivery by managing frame sequencing and reassembly, and an optional HT control field (0 or 4 octets long) for advanced features in high-throughput protocols. The FCS field, which is 4 octets long, may ensure data integrity through error detection. **FIG. 4B** illustrates the structure of the body 401, where the list length field shows the count of the streams present in the list and the stream list field is a composition of stream fields 404A and 404B shown in **FIG. 4C****.** The stream list field in FIG. 4B may, for example, be encapsulated in an Information Element according to the rules defined in section 9.4.2 of IEEE 802.11 Working Group, Draft Standard for Information Technology-Telecommunications and Information Exchange Between Systems-Local and Metropolitan Area Networks-Specific Requirements-Part 11: Wireless LAN Medium Access Control (MAC) and Physical Layer (PHY) Specifications, IEEE P802.11-REVme/D7.0, August 2024. In one example, if the frame is to be broadcasted, the stream list field 404A of each stream may comprise AID12, the SCSID of the stream, and the control field mapping as defined in the table 406 of **FIG. 4D****.** If the frame is to be unicasted, the stream list field 404B of each stream may be as the stream list field 404A excluding the AID12 field since the non-AP STA is already identified by the destination address. In this case, the size of the stream field can be reduced. FIG. 4C further shows a list of IDs 405 which may be included as part of the frame being a multi-cast frame. The list 405 includes AID12 values, which explicitly define the multicast group for pre-emption coordination. Each AID12 corresponds to a non-AP STA that is a potential pre-emptor or pre-emptee within the multicast group. The diagram shows that the list begins with the AID12 of the first STA (AID12_STA_1), followed by additional AID12 entries, including the final STA (AID12_STA_N). As indicated in the table 406, when the control field value is 0, pre-emption is disabled, meaning no pre-emption is allowed. A value of 1 indicates that pre-emption is enabled specifically for downlink (DL) transmission opportunities (TxOPs), while a value of 2 enables pre-emption for uplink (UL) TxOPs. A value of 3 allows pre-emption in both DL and UL TxOPs, offering full flexibility in pre-emption scenarios. If the value is 4, pre-emption is enabled for peer-to-peer traffic, facilitating pre-emption for direct communication between devices. Values 5-15 are reserved for future use or system-defined extensions, ensuring scalability and adaptability for additional pre-emption scenarios.

**In** **FIG. 5****,** a block circuit diagram illustrating a configuration of an apparatus 1070 is shown, which is configured to implement at least part of the present subject matter. The apparatus may be a user equipment or an access point for wireless communication. It is to be noted that the apparatus 1070 shown in FIG. 5 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor, or controller 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and instructions, such as programs to be executed by the processor 1071 and/or as a working storage of the processor 1071.

The processor 1071 is configured to execute processing related to the above described subject matter. In particular, the apparatus 1070 may be configured to cause the apparatus to perform the method as described in connection with FIG. 2 or 3.

For example, the processor 1071 is configured to cause the apparatus to perform: communicating a frame to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

The present subject matter may comprise the following clauses.

Clause 1. An apparatus, referred to as first apparatus, for a wireless communication system, the first apparatus being capable of being a part of a set of apparatuses that are configured for accessing a communication channel of the wireless communication system; the first apparatus comprising at least one processor; and at least one memory storing instructions that, when executed by the at least one processor, cause the first apparatus at least to: communicate a frame to coordinate transmission of one or more streams by associated one or more second apparatuses of the set of apparatuses on the communication channel, the frame providing each second apparatus with control information to enable or disable transmission of a stream of the one or more streams by the second apparatus within at least one time window allocated for transmission on the communication channel by one or more third apparatuses of the set of apparatuses.

Clause 2. The first apparatus of clause 1, the control information being referred to as pre-emption control information, wherein the at least one time window is: one time window for transmission by the third apparatus, in case the one or more third apparatuses is one apparatus; or multiple time windows for transmissions by the respective third apparatuses.

Clause 3. The first apparatus of any of the preceding clauses, wherein the at least one time window is at least one of the following: a time window that initiates prior to and continues during the communication of the frame; a time window that initiates immediately after the communication of the frame; or multiple time windows that exist in a period of time.

Clause 4. The first apparatus of any of the preceding clauses, wherein the instructions, when executed by the at least one processor, further cause the first apparatus to perform, before the communication of the frame a negotiation of pre-emption permissions with the apparatuses: receiving from the apparatuses one or more requests indicating streams; sending a response to one or more of the apparatuses indicating an acceptation of the respective one or more requests, wherein the one or more streams are indicated by the accepted one or more requests.

Clause 5. The apparatus of clause 4, wherein the instructions, when executed by the at least one processor, further cause the first apparatus to communicate the frame after sending the response for each request of the one or more requests, wherein the frame indicates the respective stream.

Clause 6. The first apparatus of any of the preceding clauses, wherein the instructions, when executed by the at least one processor, further cause the first apparatus to: update the frame in response to any one of the following: a new stream is registered for transmission by a second apparatus of the set of apparatuses; the first apparatus, among the set of apparatuses, being allocated a new time window for transmission of data by the first apparatus during the time window; or receiving a request from a second apparatus of the set of apparatuses; and communicate the updated frame to coordinate transmission of one or more update streams by associated one or more second apparatuses of the set of apparatuses on the communication channel, the updated frame providing each second apparatus with control information to enable or disable the update stream's transmission by the second apparatus within at least one time window allocated for transmission on the communication channel by one or more third apparatuses of the set of apparatuses.

Clause 7. The first apparatus of any of the preceding clauses, wherein the instructions, when executed by the at least one processor, further cause the first apparatus to communicate the frame by broadcasting the frame.

Clause 8. The first apparatus of any of the preceding clauses 1 to 6, wherein the one or more second apparatuses are referred to as pre-emptors, and the one or more third apparatuses are referred to as pre-emptees, wherein the instructions, when executed by the at least one processor, further cause the first apparatus to: create, from the set of apparatuses, a pre-emption management multicast group of apparatuses including potential pre-emptors and potential pre-emptees; communicate the frame by performing a multicast of the frame to the pre-emption management multicast group of apparatuses.

Clause 9. The first apparatus of any of the preceding clauses 1 to 6, wherein the instructions, when executed by the at least one processor, further cause the first apparatus to communicate the frame by sending a separate frame to each apparatus of the one or more second apparatuses and one or more additional apparatuses of the set of apparatuses.

Clause 10. The first apparatus of any of the preceding clauses, the frame being structured in accordance with a frame type of the wireless communication system, the frame type being a data frame type, control frame type, management frame type or action frame type.

Clause 11. The first apparatus of any of the preceding clauses, wherein the frame is a dedicated pre-emption coordination frame or an existing scheduled data frame or control frame of the wireless communication system that is extended to contain the pre-emption coordination frame body.

Clause 12. The first apparatus of any of the preceding clauses, wherein the frame comprises per stream of the one or more streams a stream field structure comprising an identifier of the stream, an identifier of the stream's associated second apparatus and a control field comprising the control information.

Clause 13. The first apparatus of any of the preceding clauses, wherein the one or more second apparatuses is the first apparatus.

Clause 14. The first apparatus of any of the preceding clauses, wherein the one or more third apparatuses is the first apparatus.

Clause 15. The first apparatus of any of the preceding clauses, wherein the time window comprises a transmission opportunity, TXOP, interval.

Clause 16. The first apparatus of any of the preceding clauses, wherein the set of apparatuses is capable of being a part of a basic service set, BSS, of the wireless communication system, wherein the first apparatus is an access point or a station.

Clause 17. A method comprising: communicating a frame to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

Clause 18. A computer program comprising instructions for causing a first apparatus for performing at least the following: communicate a frame to coordinate transmission of one or more streams by associated one or more second apparatuses of the set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

Clause 19. An apparatus, referred to as second apparatus, for a wireless communication system, the second apparatus being capable of being a part of a set of apparatuses that are configured for accessing a communication channel of the wireless communication system; the second apparatus comprising at least one processor; and at least one memory storing instructions that, when executed by the at least one processor, cause the second apparatus at least to: receive, from a first apparatus, a frame comprising control information to enable or disable transmission of a stream by the second apparatus within at least one time window allocated for transmission on the communication channel by one or more third apparatuses of the set of apparatuses.

Clause 20. The second apparatus of clause 19, wherein the received frame is the frame communicated by the first apparatus in accordance with any of the preceding clauses 1 to 16.

## Claims

1. An apparatus, referred to as first apparatus, for a wireless communication system, the first apparatus being capable of being a part of a set of apparatuses that are configured for accessing a communication channel of the wireless communication system; the first apparatus comprising at least one processor; and at least one memory storing instructions that, when executed by the at least one processor, cause the first apparatus at least to:
communicate a frame to coordinate transmission of one or more streams by associated one or more second apparatuses of the set of apparatuses on the communication channel, the frame providing each second apparatus with control information to enable or disable transmission of a stream of the one or more streams by the second apparatus within at least one time window allocated for transmission on the communication channel by one or more third apparatuses of the set of apparatuses.

2. The first apparatus of claim 1, the control information being referred to as pre-emption control information, wherein the at least one time window is:
one time window for transmission by the third apparatus, in case the one or more third apparatuses is one apparatus; or
multiple time windows for transmissions by the respective third apparatuses.

3. The first apparatus of any of the preceding claims, wherein the at least one time window is at least one of the following:
a time window that initiates prior to and continues during the communication of the frame;
a time window that initiates immediately after the communication of the frame; or
multiple time windows that exist in a period of time.

4. The first apparatus of any of the preceding claims, wherein the instructions, when executed by the at least one processor, further cause the first apparatus to perform, before the communication of the frame a negotiation of pre-emption permissions with the apparatuses:
receiving from the apparatuses one or more requests indicating streams;
sending a response to one or more of the apparatuses indicating an acceptation of the respective one or more requests, wherein the one or
more streams are indicated by the accepted one or more requests.

5. The first apparatus of any of the preceding claims, wherein the instructions, when executed by the at least one processor, further cause the first apparatus to:
update the frame in response to any one of the following:
a new stream is registered for transmission by a second apparatus of the set of apparatuses;
the first apparatus, among the set of apparatuses, being allocated a new time window for transmission of data by the first apparatus during the time window; or
receiving a request from a second apparatus of the set of apparatuses; and
communicate the updated frame to coordinate transmission of one or more update streams by associated one or more second apparatuses of the set of apparatuses on the communication channel, the updated frame providing each second apparatus with control information to enable or disable the update stream's transmission by the second apparatus within at least one time window allocated for transmission on the communication channel by one or more third apparatuses of the set of apparatuses.

6. The first apparatus of any of the preceding claims, the frame being structured in accordance with a frame type of the wireless communication system, the frame type being a data frame type, control frame type, management frame type or action frame type.

7. The first apparatus of any of the preceding claims, wherein the frame is a dedicated pre-emption coordination frame or an existing scheduled data frame or control frame of the wireless communication system that is extended to contain the pre-emption coordination frame body.

8. The first apparatus of any of the preceding claims, wherein the frame comprises per stream of the one or more streams a stream field structure comprising an identifier of the stream, an identifier of the stream's associated second apparatus and a control field comprising the control information.

9. The first apparatus of any of the preceding claims, wherein at least one of the following is true:
the one or more second apparatuses is the first apparatus;
the one or more third apparatuses is the first apparatus.

10. The first apparatus of any of the preceding claims, wherein the time window comprises a transmission opportunity, TXOP, interval.

11. The first apparatus of any of the preceding claims, wherein the set of apparatuses is capable of being a part of a basic service set, BSS, of the wireless communication system, wherein the first apparatus is an access point or a station.

12. A method comprising: communicating a frame to coordinate transmission of one or more streams by associated one or more second apparatuses of a set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

13. A computer program comprising instructions for causing a first apparatus for performing at least the following: communicate a frame to coordinate transmission of one or more streams by associated one or more second apparatuses of the set of apparatuses on a communication channel, the frame providing each second apparatus with control information to enable or disable transmission of a stream of the one or more streams by the second apparatus within at least one time window allocated for transmission on the communication channel by one or more third apparatuses of the set of apparatuses.

14. An apparatus, referred to as second apparatus, for a wireless communication system, the second apparatus being capable of being a part of a set of apparatuses that are configured for accessing a communication channel of the wireless communication system; the second apparatus comprising at least one processor; and at least one memory storing instructions that, when executed by the at least one processor, cause the second apparatus at least to:
receive, from a first apparatus, a frame comprising control information to enable or disable transmission of a stream by the second apparatus within at least one time window allocated for transmission on the communication channel by one or more third apparatuses of the set of apparatuses.

15. The second apparatus of claim 14, wherein the received frame is the frame communicated by the first apparatus in accordance with any of the preceding claims 1 to 11.
